# FASCICULE DE BREVET EUROPEEN

(11) **EP 1 282 552 B1**
(45) Date de publication et mention de la délivrance du brevet: **02.11.2005**
(21) Numéro de dépôt: 01933991.0
(22) Date de dépôt: 18.05.2001
(51) Int. Cl.: B62D 27/02

(54) **PROCEDE DE FABRICATION D'UN ELEMENT MODULAIRE PRET A ETRE COLLE ET PROCEDE DE MONTAGE**
HERSTELLUNGSVERFAHREN FÜR EIN MODULARES, KLEBFÄHIGES ELEMENT, UND MONTAGEVERFAHREN
METHOD FOR MAKING A READY-TO-BOND MODULAR ELEMENT AND ASSEMBLING METHOD

(30) Priorité: 18.05.2000 FR 0006399
(43) Date de publication de la demande: 12.02.2003
(73) Titulaire: Saint-Gobain Performance Plastics Chaineux, 4650 Chaineux (BE)
(72) Inventeur: COMERT, Ahmet, B-4650 Chaineux (BE); PETIT, Dominique, B-4671 Blegny (BE); MERTENS, Marc, B-4900 Spa (BE)
(74) Mandataire: Cardin, Elise
(86) Numéro de dépôt international: PCT/EP2001/005740
(87) Numéro de publication internationale: WO 2001/087691

(56) Documents cités:
- EP-A- 1 038 760
- DE-A- 2 854 766
- DE-A- 4 024 837
- DE-C- 19 632 054
- FR-A- 2 701 677
- US-A- 5 603 549

## Description

La présente invention concerne un procédé de fabrication d'un élément modulaire, tel que notamment module de toit ou de portière de véhicule automobile, prêt à être collé sur un cadre ou autre surface.

La tendance actuelle, notamment dans le domaine des véhicules automobiles, est à la conception d'éléments dits modulaires, notamment pour des portières ou des toits de véhicule, qui intègrent à une pièce de structure des fonctions additionnelles, notamment des équipements divers tels qu'un habillage ou des accessoires. Ceci a pour but de faciliter le montage du véhicule en réduisant le nombre des opérations d'assemblage sur une ligne de montage, les équipements et/ou accessoires ayant été prémontés dans un atelier ou une unité distincte.

Ainsi, on connaît de WO 98/39170, qui forme l'état le plus proche de la technique selon la préambule de la revendication 1 et 22 un module de toit pour véhicule automobile qui se compose d'une tôle et d'un habillage intérieur, susceptible d'intégrer des éléments pré-assemblés tels que pare-soleil, panneau de toit ouvrant et son mécanisme, poignée, grille de ventilation, éclairage intérieur, éléments de sécurité, airbag, etc. Le module peut être fixé sur la carrosserie du véhicule par collage exclusivement ou en complément de vissage, le module étant doté de logements prévus pour recevoir des cordons de colle.

Il est connu de US-A-4 471 519 de coller un toit sur une carrosserie de voiture en déposant un cordon de colle sur le cadre de la carrosserie, puis en pressant le toit au contact de la colle, et en faisant durcir le cordon de colle pendant un temps suffisant pour que l'ensemble atteigne la rigidité souhaitée. Il s'agit toutefois encore d'une opération qui est réalisée sur la ligne de montage et qui intervient dans le temps de montage cumulé du véhicule.

Dans le but de permettre un temps de montage le plus bref possible pour ces éléments modulaires, il apparaît souhaitable de les pré-équiper de moyens de fixation utilisables sur ligne en un temps limité.

La présente invention a pour but de proposer un nouveau mode de préparation d'éléments modulaires déjà pourvus d'un moyen de fixation, aptes à être stockés pendant une certaine période, pour pouvoir être montés directement sur un cadre ou toute autre surface réceptrice avec un nombre limité d'opérations. Le moyen de fixation devrait être le plus complet possible pour permettre une fixation définitive remplissant les critères de solidité désirés pour l'ensemble monté.

Selon l'invention, on entend par élément modulaire une pièce incorporant une ou plusieurs fonctions supplémentaires s'ajoutant à sa(ses) fonction(s) propre(s), parmi lesquelles la fonction de fixation grâce à un moyen de fixation complet intégré.

Ce but, ainsi que d'autres qui apparaîtront par la suite, a été atteint avec un procédé de fabrication d'un élément modulaire, tel qu'un module de toit ou de portière de véhicule automobile, prêt à être collé sur un cadre ou autre surface au moyen d'un cordon de collage réalisé suivant un motif de collage notamment fermé, caractérisé en ce que l'on fabrique un cordon de collage composite de forme reproduisant le motif de collage et de section déterminée, comprenant un cordon structurel lié d'une part à une couche d'adhésif protégé ou activable, et d'autre part à l'élément modulaire.

La fabrication du cordon composite avec un cordon structurel et une couche adhésive distincte permet de fixer précisément les dimensions du cordon de collage facilitant ainsi un positionnement précis de l'élément monté. Les caractéristiques dimensionnelles du cordon de collage peuvent être obtenues de manière fidèlement reproductible dans la première phase de fabrication du procédé selon l'invention.

En outre, la constitution composite du cordon de collage permet de lui faire remplir lui-même un certain nombre de fonctions additionnelles, telle que l'étanchéité, l'amortissement des sons et des chocs, en adaptant une portion spécifique du cordon.

Par ailleurs, la fabrication d'un cordon composite permet de garantir les propriétés structurelles du cordon de colle par la sélection de la matière du cordon structurel.

Ainsi, dans un mode de réalisation avantageux, le cordon structurel présente une résistance au cisaillement en traction caractérisée par une charge à rupture en traction d'au moins 7 MPa.

La réalisation d'un cordon composite permet également de n'utiliser que la quantité de colle strictement nécessaire pour la fixation, permettant une réduction substantielle de coût et de temps de montage par rapport à une solution où l'on souhaiterait former un cordon de collage constitué uniquement de colle et qui aurait des propriétés structurelles. En pareil cas, le temps de durcissement de la colle nécessaire pour que celle-ci acquière des propriétés structurelles affecte défavorablement la cadence de production. A cet égard, le cordon structurel représente avantageusement au moins 50%, de préférence d'au moins 80 ou 90% du volume du cordon composite.

Dans le cordon composite, le cordon structurel peut avantageusement remplir une fonction d'amortisseur, vis-à-vis des sons contribuant à l'insonorisation de l'ensemble ou vis-à-vis des chocs ou contraintes en absorbant des chocs ou déformations mécaniques éventuelles. Il peut aussi rattraper les tolérances sur les dimensions d'une carrosserie. A cet effet, il peut être avantageux que le cordon structurel ait des propriétés visco-élastiques adaptées.

Dans un mode de réalisation particulier, le cordon structurel est en un matériau moussé, qui peut être fabriqué par un procédé de moussage chimique d'une matière plastique au moyen d'un agent chimique (que ce soit un additif ou une fonction réactive de la matière plastique elle-même) libérant un gaz qui expanse la matière plastique, ou par un procédé de moussage physique d'une matière plastique au moyen d'un gaz mélangé à la matière plastique pour expanser cette dernière.

Un autre type de moussage ou d'expansion consiste en l'ajout de microsphères expansées ou expansibles, par exemple de marque EXPANCEL de Akzo Nobel, ou de microbilles de verre, par exemple de marque ARMOSPHERES de A.M.L. International ou E-SPHERES de Envirospheres Pty Ltd.

Parmi les matières utilisables pour réaliser le cordon structurel, on peut citer à titre d'exemple du polychlorure de vinyle plastifié, des élastomères thermoplastiques ou des polyuréthannes, modifiés ou non par un élastomère tel que des polyoléfines ou caoutchouc, notamment butyle, EPDM (éthylène-propylène-diène), nitrile, styrène-butadiène...

Les élastomères thermoplastiques sont utilisables en particulier pour former des cordons structurels non moussés.

De manière générale, les élastomères thermoplastiques (TPE) consistent en des mélanges de polymères ou en des copolymères séquencés manifestant une phase thermoplastique et une phase d'élastomère éventuellement liées chimiquement entre elles dans le cas de copolymère. Un exemple en est le produit de marque SANTOPRENE de AES qui consiste en un mélange de polypropylène (PP) et d'EPDM réticulé sous formes de nodules noyés dans la phase continue de PP, avec un rapport pondéral variable du PP par rapport à l'EPDM. On connaît aussi des produits à base de chaînes copolymères séquencés avec des séquences élastomères, notamment isoprène ou butadiène hydrogéné ou non, liées à des séquences thermoplastiques, notamment de polystyrène, par exemple les produits de marque KRATON de Shell.

On connaît également des uréthannes thermoplastiques (TPU) disponibles sous forme d'un polymère non réactif, obtenu à partir de plusieurs sources de polyol, dont au moins une forme une séquence à propriétés thermoplastiques et au moins une autre forme une séquence à propriétés élastiques. Des exemples sont les produits PEARLTHANE ou PEARLCOAT de Merquinsa, ou ELASTOLLAN de Elastogran. On peut aussi former un cordon à base de polyuréthanne avec une grande variété de compositions réactives disponibles commercialement, du type mono- ou bi-composant. A titre d'exemple on peut citer notamment des compositions mono-composant à base de prépolymère de polyuréthanne à squelette polyester, polyéther, polycaprolactone, polyoléfine, polysiloxane. Un prépolymère à terminaisons isocyanate durcit à l'humidité avec une certaine propension au moussage ; un prépolymère à terminaisons siloxane durcit à l'humidité sans mousser. Un exemple de produit commercial est le BETASEAL de Gurit Essex. Ces compositions de polyuréthanne peuvent être modifiées par un élastomère notamment caoutchouc nitrile, SBR, ou butyle, ou élastomère thermoplastique ou un polymère présentant une certaine flexibilité non réticulable tel que des polyoléfines ou du PVC plastifié. Des exemples de telles compositions utilisables pour fabriquer des matériaux moussés ou cellulaires, notamment par adjonction d'un gaz de moussage, sont décrits dans EP-A-0 326 704 ou EP-A-0 930 323.

La matière du cordon structurel peut renfermer en outre des charges organiques ou minérales, telles que du talc, de la silice, du carbonate de calcium, de l'alumine...

Avantageusement, le cordon structurel a une densité inférieure à 2,5, notamment de l'ordre de 0,8 à 2,5 pour les matériaux non cellulaires ou de 0,1 à 1 pour les matériaux moussés ou cellulaires.

Le cordon composite comprend d'autre part une couche d'adhésif destinée à réaliser la liaison de l'élément modulaire sur le cadre ou autre surface. Cette couche d'adhésif est choisie pour rester inerte pendant la période de stockage et pouvoir être activée au moment du montage.

Dans des modes de réalisation particuliers, la couche d'adhésif est constituée d'un adhésif thermoactivable, photoactivable, chimioactivable, réactif à l'humidité et/ou à pouvoir collant (tack) permanent. Un même adhésif peut présenter plusieurs de ces propriétés cumulées.

Avantageusement, la couche d'adhésif est constituée d'un adhésif protégé par une pellicule pelable.

L'activation thermique requiert généralement l'exposition de l'adhésif à des températures dépassant la température ambiante en toute saison des climats tempérés ; il n'est généralement pas nécessaire de prévoir une protection particulière pour neutraliser l'adhésif pendant la période de stockage. De même un adhésif activable par un réactif chimique déterminé n'est généralement pas sensible à l'atmosphère ambiante. Un adhésif photoactivable par de la lumière visible peut avantageusement être protégé de la lumière par une pellicule opaque. Un adhésif réactif à l'humidité doit être protégé par une pellicule barrière à l'humidité pour être stockable longtemps. Un adhésif à pouvoir collant permanent doit être protégé de tout contact pendant son stockage. Dans tous les cas, une pellicule de protection même si elle n'est pas obligatoire, est souhaitable pour éviter de souiller la surface de l'adhésif par des poussières qui pourraient gêner la liaison adhésive finale.

En tant que pellicule, on peut utiliser un film plastique notamment de polyéthylène, polyester, polychlorure de vinyle ou de vinylidène, enduit ou non d'une couche de silicone, notamment fluorosilicone pour protéger en particulier une couche adhésive à base de silicone. Le film peut également être renforcé par une couche de métal, notamment d'aluminium.

Des exemples d'adhésifs à activation thermique comprennent des résines de type époxy, polyuréthanne, polyéther ou polyester, notamment polyacrylique, oxyalkylène, vinyle ainsi que des thermoplastiques de type polyoléfine, notamment polyéthylène ou polypropylène, polyamide. La couche d'adhésif peut avantageusement être constituée d'un adhésif hot melt parmi lesquels on connaît les caoutchoucs butyle, notamment styrène-butadiène, les copolymères éthylène-acétate de vinyle (EVA), les polyamides, polyaminoamides, ou copolymères dérivés, et des compositions à base de polyuréthanne. L'adhésif peut renfermer des additifs de durcissement ou catalyseurs de réticulation activés par la chaleur.

Des adhésifs réactifs ou durcissant à l'humidité peuvent être choisis parmi des prépolymères de polyuréthanne à terminaisons isocyanate, bloqué ou non, ou silanol, des silicones, des composés polymercapto.

Des adhésifs chimioactivables peuvent notamment être des réactifs durcissant par oxydation, ou bien des compositions renfermant un adhésif et un catalyseur de durcissement encapsulé ou activable par la chaleur.

En ce qui concerne la mise en oeuvre de l'additif pour former ladite couche d'adhésif, on utilise avantageusement un adhésif de type hot-melt susceptible d'être mis en oeuvre à l'état fondu, ou un adhésif liquide ou dans un véhicule liquide, notamment en solution organique ou en suspension/dispersion aqueuse qui forme une couche adhésive par évaporation du solvant véhicule ou diluant.

L'adhésif est avantageusement choisi pour être compatible avec la matière du cordon structurel, quoiqu'il soit envisageable de traiter la face interne de la couche d'adhésif et/ou la surface du cordon structurel avec des promoteurs d'adhésion ou primaires, voire d'interposer un autre adhésif entre le cordon structurel et la couche d'adhésif.

La liaison de la couche d'adhésif sur le cordon structurel peut avantageusement être renforcée par le fait que l'une au moins des surfaces du cordon structurel et de la couche d'adhésif qui sont en contact l'une de l'autre est texturée. Le relief de la texturation a pour effet d'augmenter la surface de contact entre ces deux parties du cordon composite et donc de renforcer l'adhésion.

Le procédé selon l'invention permet avantageusement de conformer le cordon composite pour reproduire le motif de collage, avantageusement lorsque ce motif est une courbe fermée qui suit notamment au moins une partie de la périphérie de l'élément modulaire. Le procédé permet en outre de conformer également la section du cordon composite pour qu'il s'adapte parfaitement dans l'espace qui lui est réservé dans l'assemblage final.

Suivant une forme de réalisation, le cordon structurel est formé d'un seul tenant avec l'élément modulaire.

Suivant une autre forme de réalisation, on fabrique d'abord un cordon de collage composite comprenant un cordon structurel lié, d'une part, à la couche d'adhésif et présentant d'autre part une surface de liaison et l'on colle ensuite le cordon composite sur l'élément modulaire par l'intermédiaire de la surface de liaison. Dans ce cas, le cordon composite préalablement constitué peut être doté d'une surface adhésive en tant que surface de liaison du côté où l'élément modulaire est présenté, ou bien c'est l'élément modulaire lui-même qui présente une surface adhésive, éventuellement l'élément modulaire adhère au cordon parce qu'il (ou au moins une partie de ce dernier) est formé au contact du cordon composite à partir d'une masse adhérant à celui-ci.

Suivant toutes les réalisations précédentes, le cordon composite peut être formé par dépose dans une cavité de moule de la couche d'adhésif et moulage du cordon structurel dans la cavité du moule par dépose d'une matière moulable adaptée sur la couche d'adhésif dans la cavité du moule. Lorsque le cordon structurel est formé d'un seul tenant avec l'élément modulaire, on peut donc mouler l'élément modulaire (ou au moins une portion de ce dernier) directement sur la couche d'adhésif de façon à réaliser simultanément l'élément modulaire (ou la portion d'élément modulaire) et le cordon composite.

Lorsque le cordon composite est formé séparément de l'élément modulaire, on peut soit transférer le cordon composite sur un élément modulaire préfabriqué, soit mouler l'élément modulaire au contact du cordon composite dans ladite cavité. On peut alors faire durcir le cordon structurel dans le moule et/ou après transfert du cordon composite sur l'élément modulaire.

La matière moulable peut être déposée dans un moule fermé par injection d'un liquide. On peut aussi procéder dans une cavité de moule par extrusion (ou autre méthode de distribution adaptée) d'une matière visqueuse ou pâteuse, à l'aide de moyens distributeurs mobiles le moule étant fixe, ou bien de moyens distributeurs fixes le moule étant alors mobile.

La technique de moulage s'applique également à la réalisation d'un cordon adhésif homogène (non composite) reproduisant le motif de collage, ce cordon étant protégé ou activable sur une face et présentant une surface de liaison à l'élément modulaire. Le cordon de collage homogène peut être obtenu dans une cavité moule, renfermant éventuellement une pellicule de protection, par moulage-injection ou par extrusion d'une matière visqueuse dans la cavité. Cet aspect, où le cordon de collage n'est pas un cordon composite mais un cordon homogène, est également compris dans le cadre de l'invention, et toutes les mesures ou variantes décrites ou revendiquées précédemment ou ultérieurement dans la présente demande concernant le façonnage du cordon structurel et/ou composite dans un moule et transfert sur l'élément modulaire s'appliquent également au façonnage d'un cordon adhésif à partir d'une matière adhésive moulable ou extrudable adaptée.

En particulier, dans le cas où le cordon adhésif est protégé par une pellicule pelable, la matière adhésive moulable est avantageusement choisie parmi celles dont le module d'élasticité à l'état non réticulé est suffisant pour autoriser le pelage de la pellicule sans arrachement de la matière du cordon.

De telles matières comprennent notamment des systèmes réticulables à l'humidité susceptibles d'être protégés par une pellicule barrière anti-humidité, notamment des systèmes de type polyuréthanne monocomposant, de préférence thermoplastique, éventuellement modifié par un élastomère. Un système avantageux est un prépolymère de polyuréthanne à squelette de type polyester, polyéther ou polyoléfine, obtenu par exemple à partir d'un polyol et d'un polyisocyanate dont l'un au moins comporte un squelette polymère ou oligomère tel que précité.

En variante, le cordon composite peut être formé par dépose sur la couche d'adhésif dans la cavité de moule d'un cordon structurel préalablement formé, notamment moulé, la superposition des deux parties dans un autre moule permettant de maîtriser la forme précise du cordon composite. Dans cette variante, le cordon structurel préalablement formé peut être une partie intégrante d'un élément modulaire (ou une portion de ce dernier) fabriqué(e) par moulage.

Dans les deux cas, la couche d'adhésif peut être déposée dans le moule sous forme d'une bande préconstituée ou de matière réactive, liquide ou visqueuse. L'adhésif peut aussi être apporté avec le cordon structurel par coextrusion.

De préférence, on applique préalablement une pellicule de protection pelable sur la surface de la cavité de moule comme agent facilitant le démoulage. Cette pellicule pelable peut avantageusement constituer la protection de la couche d'adhésif. En particulier, la pellicule peut avoir de propriétés de barrière à l'humidité pour protéger une couche d'adhésif réactif à l'humidité.

Pour l'application d'un cordon composite réalisé séparément, on peut disposer un adhésif entre le cordon composite et l'élément modulaire. Cet adhésif peut être identique ou différent de celui utilisé pour constituer le cordon composite. Dans un mode de réalisation particulier, la couche d'adhésif du cordon composite enrobe complètement le cordon structurel et constitue à la fois l'agent de liaison du cordon composite sur l'élément modulaire et de sur l'élément modulaire sur le cadre ou autre surface d'application.

Un tel cordon composite peut être fabriqué en notamment coextrudant l'adhésif tout autour du cordon structurel, le produit de coextrusion pouvant être déposé dans une cavité de moule préalablement équipée d'une pellicule de protection, pour prendre sa forme définitive. Par coextrusion, on entend ici aussi bien la formation du cordon structurel simultanément à son enrobage au moyen d'une tête d'extrusion alimentée en deux matières extrudables, que l'application de matière adhésive dans une tête d'extrusion à travers laquelle défile un cordon structurel préalablement formé, notamment par extrusion.

Dans une autre forme de réalisation, la matière du cordon structurel est choisie pour être elle-même adhésive et coller à l'élément modulaire à l'état non durci ou partiellement durci ou après activation notamment thermique.

Un procédé de fabrication préféré consiste à déposer dans une cavité de moule, avantageusement prééquipée d'une pellicule de protection, une couche d'adhésif, puis une matière moulable constituant le cordon structurel, et ensuite de presser l'élément modulaire contre le cordon structurel pour coller le cordon structurel sur l'élément modulaire. Ensuite, on peut éventuellement faire durcir au moins partiellement le cordon composite dans ce moule ainsi fermé par l'élément modulaire, avant de retirer l'élément modulaire sur lequel est fixé le cordon composite, le cas échéant y compris sa pellicule de protection. Le durcissement du cordon structurel peut avantageusement être effectué ou terminé en dehors du moule par refroidissement ou par réaction avec l'humidité de l'air.

Un tel procédé de dépose par transfert d'un cordon moulé en polyuréthanne modifié par un élastomère est décrit dans le document US-5 164 136.

Le procédé selon l'invention permet la fabrication en grande série d'éléments modulaires prêts à être montés par collage, cette fabrication pouvant être automatisée. Le montage final de ces éléments modulaires est très rapide et répond au besoin de réduction du temps de montage d'ensembles tels que les véhicules automobiles.

L'invention a encore pour objet un procédé de montage d'un élément modulaire, tel qu'un module de toit ou de portière de véhicule automobile, prêt à être collé sur un cadre ou autre surface au moyen d'un cordon adhésif déposé suivant un motif de collage fabriqué comme décrit précédemment, caractérisé en ce que l'on retire la protection ou l'on active la couche d'adhésif et l'on applique l'élément modulaire sur le cadre ou autre surface.

D'autres détails et caractéristiques avantageuses ressortiront ci-après à la lecture de la description d'exemples illustratifs, mais non limitatifs de l'invention, faite en référence aux dessins annexés sur lesquels :
- la figure 1 représente une vue en perspective de l'assemblage d'un module de toit sur une carrosserie de voiture automobile ;
- la figure 2 représente une vue en coupe de la zone de bordure du module de toit équipé d'un cordon de collage ;
- la figure 3 illustre la fabrication du cordon de collage ;
- les figures 4, 5, 6 et 7 représentent deux variantes du cordon de collage et leur fabrication
- la figure 8 représente un autre aspect de l'invention avec un cordon de collage homogène.

On précise tout d'abord que par souci de clarté les proportions relatives entre les différents éléments représentés ne sont pas respectées.

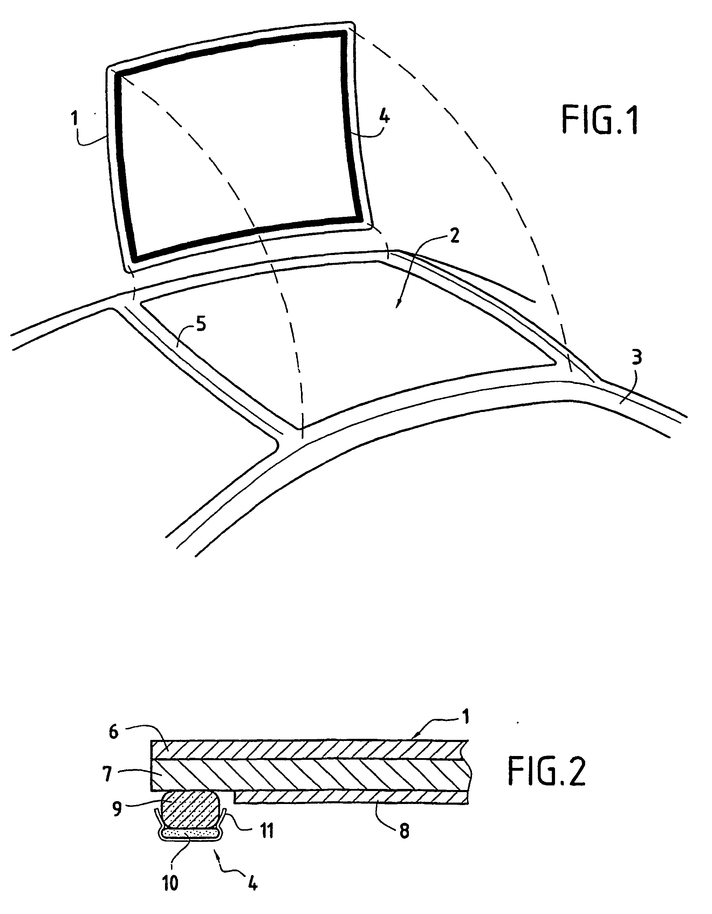

La figure 1 montre une vue en perspective de la partie supérieure d'un véhicule automobile équipé d'un module de toit 1 rapporté sur une baie 2 de la carrosserie 3.

Le module de toit 1 est représenté en position non montée pour rendre visible sa face qui est dirigée vers l'intérieur du véhicule. Pour simplifier la lecture de la figure, aucun accessoire ou équipement n'est représenté sur le module de toit, mais il va de soi que tous les équipements usuels tels que pare soleil, etc. peuvent être intégrés à ce module.

Le montage du module de toit 1 sur la carrosserie 3 se fait par l'intermédiaire d'un cordon de collage 4 qui est amené en contact avec une bride 5 de la baie de carrosserie. Dans ce cas le motif de collage est en forme de cadre fermé longeant la périphérie du module de toit. Le cordon de collage 4 assure la fixation du module 1 sur la carrosserie 3 et peut aussi exercer une fonction telle que l'étanchéité entre l'espace intérieur et l'espace extérieur délimités par ces deux parties.

La structure du cordon 4 est composite selon l'invention et est visible sur la figure 2 qui montre également la structure du module 1. Sur cette figure, le module est représenté tel qu'il est avant de procéder au montage sur le véhicule.

Dans le mode de réalisation représenté, le module 1 a une structure dite sandwich avec une tôle extérieure 6, une masse intermédiaire 7 et un habillage intérieur 8. Le cordon de collage est disposé en périphérie du module 1 sur ou à côté de l'habillage 8.

Le cordon composite est formé d'un cordon structurel 9 lié au module 1 et d'une couche d'adhésif 10 solidaire du cordon structurel et protégée par une pellicule 11. Le cordon structurel 9 a une section calibrée en fonction de l'écartement autorisé entre le module 1 et la bride 5. Ici la section est représentée sensiblement circulaire mais peut être tout autre, notamment adaptée à une forme spécifique de la bride 5. Pour remplir la fonction d'étanchéité, et pour éventuellement compenser les tolérances de fabrications de la carrosserie, le cordon structurel 9 est avantageusement fait d'un matériau visco-élastique, tel que le produit de marque BETASEAL de Gurit Essex, de préférence d'une densité d'environ 1 favorable à la rigidité de l'assemblage.

A l'opposé du module, le cordon structurel 9 est muni d'une couche adhésive 10 recouvrant au moins une partie de la surface du cordon 9. La couche 10 a approximativement la forme d'une bande sensiblement plane d'épaisseur variable. Avantageusement, on utilise une quantité d'adhésif 10 aussi faible que possible pour assurer un collage efficace, alors que le cordon structurel 9 occupe au moins environ 50% du volume du cordon composite 4. Une matière adhésive préférée est un adhésif à pouvoir collant (tack) permanent ou encore un polyuréthanne durcissant à l'humidité. La pellicule 11 a généralement pour but d'éviter, pendant la période de stockage chez le fabricant de module ou chez le constructeur automobile, que des poussières ne viennent souiller le cordon de collage et d'éviter tout contact avec une surface autre que la surface finale d'assemblage qui provoquerait un endommagement de la couche d'adhésif 10. Elle a également pour fonction de protéger la couche d'adhésif contre les conditions extérieures, notamment humidité, lumière, oxygène, susceptibles de provoquer l'activation intempestive de l'adhésif 10.

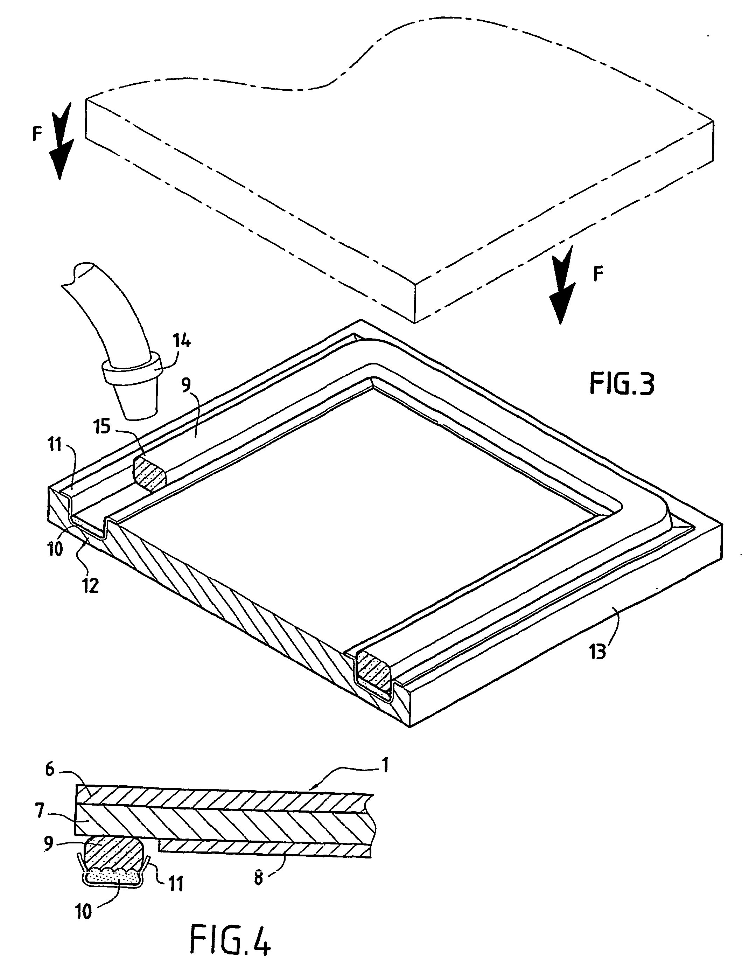

La fabrication du cordon composite est illustrée sur la figure 3. Dans la cavité 12 d'un moule 13 on dispose une pellicule 11 dont la face en contact avec le moule (qui sera la face externe de la pellicule, une fois le cordon 4 terminé) peut être en polyéthylène pour servir d'agent de libération de la matière moulée. Sur la face interne de la pellicule 11 on dépose une couche d'adhésif 10 sous forme d'une bande déroulable ou bien sous forme de matière fluide ou visqueuse, notamment un adhésif hot melt à l'état fondu ou un adhésif liquide ou en solution organique ou dispersion aqueuse dont on fait évaporer le solvant ou diluant, qui est conformée dans la cavité. Ensuite on dépose sur la couche d'adhésif 10 la matière du cordon 9 par exemple au moyen d'une buse d'extrusion 14 que l'on déplace tout le long de la cavité 11 en un circuit fermé. De la sorte, on peut former un cordon en forme de cadre sans discontinuité, n'entraînant donc aucun défaut d'étanchéité. La buse 14 peut avoir une section calibrée pour donner une forme préliminaire à la matière du cordon 9, qui termine d'être conformée dans la cavité 12 du moule 13.

Dès la fin de la dépose de la matière du cordon 9, le cordon composite peut être installé sur le module de toit 1, par transfert sur ce dernier : on vient presser (dans le sens des flèches F) le module de toit 1 figuré en trait mixte contre la surface 15 du cordon 9 non encore durcie et la matière adhère spontanément à la surface du module. En variante, on peut appliquer sur la surface du cordon 9 durci ou non (si la matière du cordon structurel 9 n'adhère pas spontanément au matériau du module 1) une couche d'adhésif supplémentaire, identique ou non à celui de la couche 10. C'est cette deuxième couche qui forme alors la surface adhésive 15 du cordon 9.

Après un temps de pose plus ou moins long selon les matières employées, le module de toit 1 peut être enlevé de la surface du moule avec le cordon composite 4 lié à sa surface. La pellicule 11 est également extraite de la cavité du moule et reste attachée à la couche d'adhésif 10 qu'elle protège immédiatement de la poussière et/ou de l'humidité.

Le module 1 ainsi équipé du cordon de collage 4 peut être maintenu pendant un temps suffisant pour le durcissement ou l'acquisition des propriétés structurelles du cordon 9, puis stocké dans l'attente de son utilisation pour le montage sur un véhicule.

Le montage s'effectue simplement en retirant la pellicule de protection 11, après quoi on plaque le cordon 4 au contact de la bride 5. Avec un adhésif thermoactivable, on peut procéder d'abord au chauffage de la couche d'adhésif notamment par une source infrarouge ou bien mettre en place le module 1 contre la bride 5 puis chauffer portant le cordon de collage à la température nécessaire pour activer l'adhésif, par exemple en chauffant la bride 5 de l'intérieur.

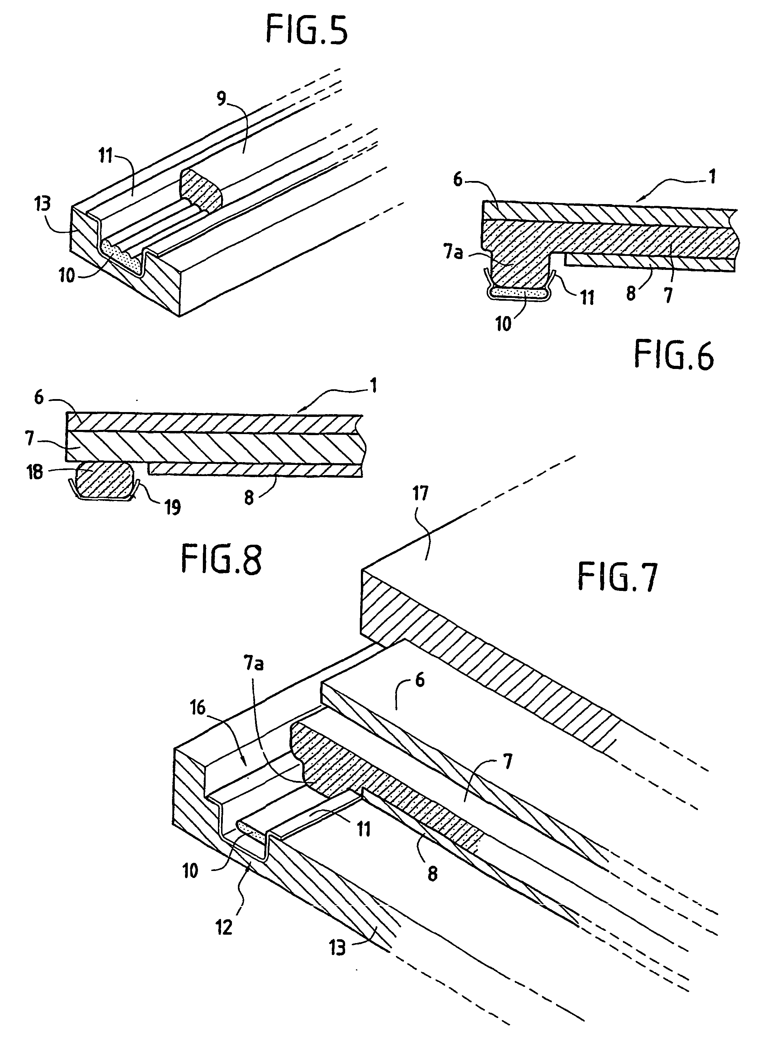

La figure 4 montre une variante de réalisation du cordon composite 4 où la surface de la couche d'adhésif 10 qui entre en liaison avec le cordon structurel 9 est texturée afin d'augmenter la surface de contact entre ces deux parties de cordon composite. Une telle couche d'adhésif peut être réalisée notamment par dépose dans la cavité 12 d'une matière adhésive avec une buse 14 de section appropriée. Le cordon composite est ensuite obtenu de préférence en extrudant une matière visqueuse ou pâteuse sur la surface texturée de la couche d'adhésif 10, de la façon représentée sur la figure 5. La matière extrudée du cordon 9 épouse le contour de la face texturée de la couche 10 suivant une surface de contact plus importante qu'avec un contact plan, d'où il résulte une meilleure adhésion.

La figure 6 montre une variante de réalisation où le cordon composite fait appel à un cordon structurel 7a formé d'un seul tenant avec la couche 7 de l'élément modulaire.

La fabrication de cette variante est illustrée sur la figure 7.

On utilise ici un moule inférieur 13 ayant une cavité 12 semblable à celle de la variante précédente, creusée au fond d'une première cavité 16 qui s'étend sur presque toute la surface du moule 13.

Dans la cavité 12 du moule inférieur 13, on dépose comme précédemment la pellicule 11 et l'adhésif 10. Puis on applique le revêtement d'habillage 8 sur la partie centrale de la cavité 16 du moule 13.

On dépose dans la cavité 12 et sur l'habillage 8 dans la cavité 16 la masse intégrale de matière intermédiaire 7 telle que du polyuréthanne.

On accoste ensuite la tôle 6 et l'on presse le tout avec un moule supérieur 17. On forme ainsi simultanément le module et le cordon de collage composite.

En variante, on peut former un cordon structurel 9 en déposant dans la cavité 12 un premier polyuréthanne à fort caractère visco-élastique et former ensuite la masse intermédiaire 7 avec un deuxième polyuréthanne plus rigide.

Dans une autre variante, on peut former la masse intermédiaire 7 par injection de matière dans la cavité formée par les deux demi-moules 13 et 17 où ont été préalablement disposés la pellicule 11, la couche d'adhésif 10 et l'habillage 8 d'une part et la tôle 6 d'autre part.

La figure 8 illustre un autre aspect de l'invention où l'élément modulaire est prééquipé d'un cordon de collage homogène protégé ou activable. Le module de toit 1 a une structure identique à celle du module des figures 2 ou 4. Il est pourvu d'un cordon de collage 18 disposé en périphérie du module sur ou à côté de l'habillage 8.

Le cordon de collage 18 est lié sur une première face au module 1 et est protégé sur une autre face par une pellicule 19, la face protégée étant adhésive après retrait de la pellicule.

A cet effet, le cordon 18 peut être constitué d'un adhésif réticulable à l'humidité, la pellicule 19 ayant une fonction de barrière à l'humidité, par exemple en polyéthylène basse densité. Le matériau adhésif utilisable peut être choisi parmi des systèmes à base de polyuréthanne, avantageusement thermoplastique, éventuellement modifié par à un polymère notamment un élastomère, pour conférer à l'adhésif des propriétés mécaniques souhaitées. Parmi ces matériaux, on préfère tout particulièrement des prépolymères de polyuréthanne à squelette polymère ou oligomère, notamment polyéther et/ou polyester. Une composition de polyuréthanne thermoplastique et réticulable à l'humidité adaptée à cet emploi peut être obtenue par la réaction à chaud de 2 parts d'un polyesterdiol commercialisé sous la marque DYNACOLL® 7231 par la société Degussa-Huls avec 1 part de prépolymère d'isocyanate à base de polyéther commercialisé sous la marque LUPRANAT® MP130 par la société BASF.

La fabrication du cordon 18 a lieu d'une manière voisine de celle décrite plus haut en référence à la figure 3. Dans la cavité 12 d'un moule 13, on dispose une pellicule désignée ici par la référence 19 dont la face en contact avec le moule (qui sera la face externe de la pellicule après extraction du module hors du moule) avantageusement en polyéthylène peut servir d'agent de libération de la matière moulée. Sur la face interne de la pellicule 19 on dépose la matière du cordon 18, par exemple au moyen d'une buse d'extrusion 14. La suite des opérations est similaire à ce qui a été exposé à l'occasion de la description de la figure 3.

Notamment, le transfert du cordon 18 sur le module peut avoir lieu par pressage du module sur le cordon ayant encore une face supérieure adhésive pour la liaison au module, le durcissement ou la prise de la matière du coeur du cordon pouvant être obtenus en maintenant l'ensemble dans le moule ou de préférence après avoir extrait du moule le module auquel adhère désormais le cordon en exposant simplement les faces libres du cordon à l'humidité ambiante ou à une humidité contrôlée.

Dans une autre variante, le cordon 18 peut être revêtu sur sa face supérieure d'une autre pellicule de protection similaire à la pellicule 19, puis extrait du moule pour subir un traitement de durcissement ou de prise. L'application du cordon sur le module 1 peut alors avoir lieu dans un poste séparé où l'on retire la deuxième pellicule de protection pour libérer une surface adhésive vis à vis du module.

Dans une autre variante de réalisation, l'adhésif peut être choisi parmi des matières activables par voie thermique, notamment des adhésifs hot melt, ou par voie chimique. Il n'y a alors plus un besoin impératif de prévoir de pellicule de protection 19, bien qu'elle soit encore préférée pour protéger la surface activable de toute poussière ou salissures susceptibles de contrarier l'activation et/ou l'adhérence de la face activée.

L'invention a été décrite dans le cas particulier de la fabrication d'un module de toit prêt au collage sur un cadre mais s'applique à la réalisation de tout autre élément modulaire destiné à être assemblé par collage avec un élément de carrosserie ou autre. On envisage ainsi la réalisation de pièces décoratives, protectrices ou autres, dotées éventuellement de fonctionnalités additionnelles, prêtes au collage sur une pièce complémentaire avec une surface d'assemblage non nécessairement en forme de cadre.

## Revendications

1. Procédé de fabrication d'un élément modulaire (1), tel qu'un module de toit ou de portière de véhicule automobile, prêt à être collé sur un cadre ou autre surface au moyen d'un cordon de collage (4) réalisé suivant un motif de collage notamment fermé, **caractérisé en ce que** l'on fabrique un cordon de collage composite (4) de forme reproduisant le motif de collage et de section déterminée, comprenant un cordon structurel (9) lié, d'une part, à une couche d'adhésif (10) protégé (11) ou activable et, d'autre part, à l'élément modulaire (1).

2. Procédé selon la revendication 1, **caractérisé en ce que** le cordon structurel (9) a une résistance en traction d'au moins 7 MPa.

3. Procédé selon la revendication 1 ou 2, **caractérisé en ce que** le cordon structurel (9) représente au moins 50% du volume du cordon composite.

4. Procédé selon l'une des revendications 1 à 3, **caractérisé en ce que** le cordon structurel (9) a des propriétés visco-élastiques.

5. Procédé selon l'une des revendications 1 à 4, **caractérisé en ce que** le cordon structurel (9) est en un matériau moussé.

6. Procédé selon la revendication 5, **caractérisé en ce que** le cordon structurel (9) est à base d'élastomère thermoplastique ou de polyuréthanne, modifié ou non par un élastomère.

7. Procédé selon la revendication 5 ou 6, **caractérisé en ce que** le cordon structurel (9) a une densité de 0,1 à 2,5.

8. Procédé selon l'une des revendications précédentes, **caractérisé en ce que** la couche d'adhésif (10) est constituée d'un adhésif thermoactivable, photoactivable, chimioactivable.

9. Procédé selon l'une quelconque des revendications 1 à 7, **caractérisé en ce que** la couche d'adhésif (10) est constituée d'un adhésif à pouvoir collant (tack) permanent ou réactif à l'humidité protégé par une pellicule pelable.

10. Procédé selon l'une quelconque des revendications précédentes, **caractérisé en ce que** la couche d'adhésif (10) est constituée d'un adhésif hot melt ou à partir d'un adhésif liquide ou dans un véhicule liquide.

11. Procédé selon l'une quelconque des revendications précédentes, **caractérisé en ce que** l'une au moins des surfaces du cordon structurel (9) et de la couche d'adhésif (10) en contact est texturée.

12. Procédé selon l'une quelconque des revendications précédentes, **caractérisé en ce que** le cordon structurel (9) est formé d'un seul tenant avec l'élément modulaire (1).

13. Procédé selon l'une quelconque des revendications 1 à 11, **caractérisé en ce que** l'on fabrique d'abord un cordon de collage composite (4) comprenant un cordon structurel (9) lié, d'une part, à la couche d'adhésif (10) et présentant, d'autre part, une surface de liaison (15), et **en ce que** l'on colle ensuite le cordon composite (4) sur l'élément modulaire (1) sur la surface de liaison (15).

14. Procédé selon la revendication 13, **caractérisé en ce que** la surface de liaison est une surface adhésive (15).

15. Procédé selon la revendication 13, **caractérisé en ce qu'**au moins une partie (7) de l'élément modulaire (1) est formée au contact de la surface de liaison à partir d'une masse adhérant à cette dernière.

16. Procédé selon l'une quelconque des revendications précédentes **caractérisé en ce que** le cordon composite (4) est formé par dépose dans une cavité (12) de moule (13) de la couche d'adhésif (10) et moulage du cordon structurel (9) dans la cavité (12) du moule.

17. Procédé selon la revendication 16, **caractérisé en ce que** l'on fait durcir le cordon structurel (9) dans le moule et/ou après transfert du cordon composite (4) sur l'élément modulaire (1).

18. Procédé selon l'une des revendications 1 à 15, **caractérisé en ce que** le cordon composite (4) est formé par dépose sur la couche d'adhésif (10) dans la cavité (12) de moule d'un cordon structurel (9) préalablement formé.

19. Procédé selon l'une quelconque des revendications 16 à 18, **caractérisé en ce que** la couche d'adhésif (10) est déposée dans le moule sous forme d'une bande préconstituée ou de matière réactive, liquide ou visqueuse.

20. Procédé selon l'une quelconque des revendications 16 à 19, **caractérisé en ce que** l'on applique une pellicule de protection (11) pelable sur la surface de la cavité (12) de moule comme agent facilitant le démoulage.

21. Procédé selon la revendication 20, **caractérisé en ce que** la pellicule (11) est une barrière à l'humidité pour protéger une couche d'adhésif (10) réactif à l'humidité.

22. Procédé de fabrication d'un élément modulaire (1), tel qu'un module de toit ou de portière de véhicule automobile, prêt à être collé sur un cadre ou autre surface au moyen d'un cordon de collage (4) réalisé suivant un motif de collage notamment fermé, **caractérisé en ce que** l'on fabrique un cordon adhésif (18) de forme reproduisant le motif de collage et de section déterminée, le cordon présentant au moins un face adhésive protégée (19) ou activable, par moulage d'une matière adhésive dans la cavité d'un moule.

23. Procédé selon la revendication 22, **caractérisé en ce que** l'on fabrique un cordon adhésif (18) moulé présentant au moins deux faces adhésives protégées ou activables, dont une est destinée à être amenée en liaison avec l'élément modulaire après déprotection ou activation.

24. Procédé de montage d'un élément modulaire (1), tel qu'un module de toit ou de portière de véhicule automobile, prêt à être collé sur un cadre (5) ou autre surface au moyen d'un cordon de collage (4) déposé suivant un motif de collage fabriqué selon l'une quelconque des revendications 1 à 23, **caractérisé en ce que** l'on retire la protection (11) ou l'on active la couche d'adhésif (10) et l'on applique l'élément modulaire (1) sur le cadre (5) ou autre surface.

## Patentansprüche

1. Verfahren zur Herstellung eines modularen Elements (1) wie eines Dach- oder Türmoduls für ein Kraftfahrzeug, das fertig ist, in einen Rahmen oder auf eine andere Fläche mittels einer Klebeschnur (4) geklebt zu werden, die entsprechend einem insbesondere geschlossenen Klebemuster erzeugt worden ist, **dadurch gekennzeichnet, dass** eine Verbundklebeschnur (4) mit einer Form, die das Klebemuster wiedergibt, und mit einem festgelegten Querschnitt hergestellt wird, welche eine strukturgebende Schnur (9) umfasst, die einerseits mit einer Haftschicht (10), die geschützt (11) oder aktivierbar ist, und andererseits mit dem modularen Element (1) verbunden ist.

2. Verfahren nach Anspruch 1, **dadurch gekennzeichnet, dass** die Zugfestigkeit der strukturgebenden Schnur (9) mindestens 7 MPa beträgt.

3. Verfahren nach Anspruch 1 oder 2, **dadurch gekennzeichnet, dass** die strukturgebende Schnur (9) mindestens 50 % des Volumens der Verbundklebeschnur ausmacht.

4. Verfahren nach einem der Ansprüche 1 bis 3, **dadurch gekennzeichnet, dass** die strukturgebende Schnur (9) viskoelastische Eigenschaften besitzt.

5. Verfahren nach einem der Ansprüche 1 bis 4, **dadurch gekennzeichnet, dass** die strukturgebende Schnur (9) aus einem schaumförmigen Material besteht.

6. Verfahren nach Anspruch 5, **dadurch gekennzeichnet, dass** die strukturgebende Schnur (9) ein thermoplastisches Elastomer oder ein gegebenenfalls mit einem Elastomer modifiziertes Polyurethan zur Basis hat.

7. Verfahren nach Anspruch 5 oder 6, **dadurch gekennzeichnet, dass** das spezifische Gewicht der strukturgebenden Schnur (9) 0,1 bis 2,5 beträgt.

8. Verfahren nach einem der vorhergehenden Ansprüche, **dadurch gekennzeichnet, dass** die Haftschicht (10) aus einem Haftmittel besteht, das thermisch, durch Licht und chemisch aktivierbar ist.

9. Verfahren nach einem der Ansprüche 1 bis 7, **dadurch gekennzeichnet, dass** die Haftschicht (10) aus einem Haftmittel mit Klebkraft (Tack), die permanent ist oder bei Reaktion mit Feuchtigkeit entsteht, besteht und von einem abziehbaren Film geschützt wird.

10. Verfahren nach einem der vorhergehenden Ansprüche, **dadurch gekennzeichnet, dass** die Haftschicht (10) aus einem Heißschmelzklebstoff besteht oder aus einem flüssigen Klebstoff bzw. in einem flüssigen Träger gebildet worden ist.

11. Verfahren nach einem der vorhergehenden Ansprüche, **dadurch gekennzeichnet, dass** mindestens eine der in Kontakt befindlichen Oberflächen von strukturgebender Schnur (9) und Haftschicht (10) texturiert ist.

12. Verfahren nach einem der Ansprüche 1 bis 11, **dadurch gekennzeichnet, dass** die strukturgebende Schnur (9) zusammen mit dem modularen Element (1) aus einem Ganzen ist.

13. Verfahren nach einem der Ansprüche 1 bis 11, **dadurch gekennzeichnet, dass** zunächst eine Verbundklebeschnur (4) hergestellt wird, welche eine strukturgebende Schnur (9) umfasst, die einerseits mit der Haftschicht (10) verbunden ist und andererseits eine Bindungsfläche (15) aufweist, und dass anschließend die Verbundklebeschnur (4) mit der Bindungsfläche (15) auf das modulare Element (1) geklebt wird.

14. Verfahren nach Anspruch 13, **dadurch gekennzeichnet, dass** die Bindungsfläche eine Haftfläche (15) ist.

15. Verfahren nach Anspruch 13, **dadurch gekennzeichnet, dass** mindestens ein Teil (7) des modularen Elements (1) in Berührung mit der Bindungsfläche aus einer an dieser anhaftenden Masse gebildet wird.

16. Verfahren nach einem der vorhergehenden Ansprüche, **dadurch gekennzeichnet, dass** die Verbundklebeschnur (4) durch Aufbringen der Haftschicht (10) im Nest (12) einer Form (13) und Formgeben der strukturgebenden Schnur (9) im Nest (12) der Form gebildet wird.

17. Verfahren nach Anspruch 16, **dadurch gekennzeichnet, dass** die strukturgebende Schnur (9) in der Form und/oder nach Übertragen der Verbundklebeschnur (4) auf das modulare Element (1) aushärten gelassen wird.

18. Verfahren nach einem der Ansprüche 1 bis 15, **dadurch gekennzeichnet, dass** die Verbundklebeschnur (4) im Nest (12) einer Form durch Aufbringen einer zuvor geformten strukturgebenden Schnur (9) auf die Haftschicht (10) gebildet wird.

19. Verfahren nach einem der Ansprüche 16 bis 18, **dadurch gekennzeichnet, dass** die Haftschicht (10) in Form eines vorgebildeten Bandes oder eines flüssigen oder viskosen reaktiven Material in der Form aufgebracht wird.

20. Verfahren nach einem der Ansprüche 16 bis 19, **dadurch gekennzeichnet, dass** auf der Oberfläche des Nests (12) der Form eine abziehbare Schutzfolie (11) als Entnahmehilfsmittel aufgebracht wird.

21. Verfahren nach Anspruch 20, **dadurch gekennzeichnet, dass** die Folie (11) eine Feuchtigkeitssperre bildet, um die reaktive Haftschicht (10) vor Feuchtigkeit zu schützen.

22. Verfahren zur Herstellung eines modularen Elements (1) wie eines Dach- oder Türmoduls für ein Kraftfahrzeug, das fertig ist, in einen Rahmen oder auf eine andere Fläche mittels einer Klebeschnur (4) geklebt zu werden, die entsprechend einem insbesondere geschlossenen Klebemuster erzeugt worden ist, **dadurch gekennzeichnet, dass** eine Klebschnur (18) mit einer das Klebemuster wiedergebenden Form und welche einen festgelegten Querschnitt und mindestens eine geschützte oder aktivierbare haftfähige Seite (19) aufweist, durch Formgebung eines haftfähigen Materials im Nest einer Form hergestellt wird.

23. Verfahren nach Anspruch 22, **dadurch gekennzeichnet, dass** eine geformte Klebschnur (18) hergestellt wird, die mindestens zwei geschützte oder aktivierbare haftfähige Seiten aufweist, wovon eine vorgesehen ist, nach Entfernung des Schutzes oder Aktivierung mit dem modularen Element in Verbindung gebracht zu werden.

24. Verfahren zum Anbringen eines modularen Elements (1) wie eines Dach- oder Türmoduls für ein Kraftfahrzeug, das fertig ist, in einen Rahmen (5) oder auf eine andere Fläche mittels einer Klebschnur (4) geklebt zu werden, die entsprechend einem geschlossenen Klebemuster aufgebracht wird und gemäß einem der Ansprüche 1 bis 23 hergestellt worden ist, **dadurch gekennzeichnet, dass** der Schutz (11) abgezogen oder die Haftschicht (10) aktiviert und das modulare Element (1) in dem Rahmen (5) oder auf einer anderen Fläche befestigt wird.

## Claims

1. A method for manufacturing a modular element (1), such as a motor-vehicle roof or door module, ready to be bonded to a frame or other surface by means of a bonding bead (4) made in an especially closed 'bonding pattern, **characterized in that** a composite bonding bead (4) of shape reproducing the bonding pattern and of defined cross section is manufactured, comprising a structural bead (9) bonded, on one side, to a layer of adhesive (10), which is protected (11) or can be activated, and, on the other side, to the modular element (1).

2. The method as claimed in claim 1, **characterized in that** the structural bead (9) has a tensile strength of at least 7 MPa.

3. The method as claimed in claim 1 or 2, **characterized in that** the structural bead (9) represents at least 50% of the volume of the composite bead.

4. The method as claimed in one of claims 1 to 3, **characterized in that** the structural bead (9) has viscoelastic properties.

5. The method as claimed in one of claims 1 to 4, **characterized in that** the structural bead (9) is made of a foamed material.

6. The method as claimed in claim 5, **characterized in that** the structural bead (9) is based on a thermoplastic elastomer or a polyurethane, which may or may not be modified by an elastomer.

7. The method as claimed in claim 5 . or 6, **characterized in that** the structural bead (9) has a density of 0.1 to 2.5.

8. The method as claimed in one of the preceding claims, **characterized in that** the layer of adhesive (10) consists of a thermally activatable, photoactivatable or chemically activatable adhesive.

9. The method as claimed in any one of claims 1 to 7, **characterized in that** the layer of adhesive (10) consists of an adhesive that has a permanent tack or is moisture-reactive, protected by a peelable film.

10. The method as claimed in any one of the preceding claims, **characterized in that** the layer of adhesive (10) consists of a hot-melt adhesive or is formed from a liquid adhesive or an adhesive in a liquid vehicle.

11. The method as claimed in any one of the preceding claims, **characterized in that** at least one of the surfaces of the structural bead (9) and of the contacting layer of adhesive (10) is textured.

12. The method as claimed in any one of the preceding claims, **characterized in that** the structural bead (9) is formed as a single piece with the modular element (1).

13. The method as claimed in any one of claims 1 to 11, **characterized in that** a composite bonding bead (4) is firstly manufactured, which comprises a structural bead (9) bonded, on one side, to the layer of adhesive (10) and having, on the other side, a bonding surface (15) and **in that** the composite bead (4) is then bonded to the modular element (1) on the bonding surface (15).

14. The method as claimed in claim 13, **characterized in that** the bonding surface is an adhesive surface (15).

15. The method as claimed in claim 13, **characterized in that** at least one part (7) of the modular element (1) is formed at the contact with the bonding surface from a substance adhering to the latter.

16. The method as claimed in any one of the preceding claims, **characterized in that** the composite bead (4) is formed by depositing the layer of adhesive (10) in a cavity (12) of mold (13) and by molding the structural bead (9) in the cavity (12) of the mold.

17. The method as claimed in claim 16, **characterized in that** the structural bead (9) is cured in the mold and/or after the composite bead (4) has been transferred to the modular element (1).

18. The method as claimed in one of claims 1 to 15, **characterized in that** the composite bead (4) is formed by depositing a preformed structural bead (9) on the layer of adhesive (10) in the mold cavity (12).

19. The method as claimed in any one of claims 16 to 18, **characterized in that** the layer of adhesive (10) is deposited in the mold in the form of a preformed strip or of reactive, liquid or viscous material.

20. The method as claimed in any one of claims 16 to 19, **characterized in that** a peelable protective film (11) is applied to the surface of the mold cavity (12) as mold release agent.

21. The method as claimed in claim 20, **characterized in that** the film (11) is a moisture barrier in order to protect a layer of moisture-reactive adhesive (10).

22. A method of manufacturing a modular element (1), such as a motor-vehicle roof or door module, ready to be bonded to a frame or other surface by means of a bonding bead (4) made in an especially closed bonding pattern, **characterized in that** an adhesive bead (18) of shape reproducing the bonding pattern and of defined cross section is manufactured, the bead having at least one protected (19) or activatable adhesive face, by molding an adhesive material in the cavity of a mold.

23. The method as claimed in claim 22, **characterized in that** a molded adhesive bead (18) having at least two protected or activatable adhesive faces is manufactured, one of said faces being intended to be brought into contact with the modular element after activation or removal of the protection.

24. A method of mounting a modular element (1), such as a motor-vehicle roof or door module, ready to be bonded to a frame (5) or other surface by means of a bonding bead (4) deposited in a bonding pattern, manufactured as claimed in any one of claims 1 to 23, **characterized in that** the protection (11) is removed or the layer of adhesive (10) is activated, and the modular element (1) is applied to the frame (5) or other surface.
